Europäisches Patentamt

European Patent Office

Office européen des brevets

(11) Veröffentlichungsnummer: **0 113 890**
**B1**

(12) **EUROPÄISCHE PATENTSCHRIFT**

(45) Veröffentlichungstag der Patentschrift:
30.03.88

(51) Int. Cl.⁴: **G 01 P 3/36**

(21) Anmeldenummer: **83112643.8**

(22) Anmeldetag: **15.12.83**

(54) **Einrichtung zur Messung der Rotationsgeschwindigkeit.**

(30) Priorität: **18.12.82 DE 3247013**

(43) Veröffentlichungstag der Anmeldung:
**25.07.84 Patentblatt 84/30**

(45) Bekanntmachung des Hinweises auf die Patenterteilung:
**30.03.88 Patentblatt 88/13**

(84) Benannte Vertragsstaaten:
**DE FR GB**

(56) Entgegenhaltungen:
**EP - A - 0 063 977**
**EP - A - 0 074 609**
**DE - A - 2 941 618**
**US - A - 4 283 144**

(73) Patentinhaber: **Alcatel N.V., De Lairessestraat 153, NL-1075 HK Amsterdam (NL)**
(84) Benannte Vertragsstaaten: **FR GB**

(73) Patentinhaber: **Standard Elektrik Lorenz Aktiengesellschaft, Hellmuth-Hirth-Strasse 42, D-7000 Stuttgart 40 (DE)**
(84) Benannte Vertragsstaaten: **DE**

(72) Erfinder: **Auch, Wilfried, Dr., Weimarstrasse 6, D-7144 Asperg (DE)**
Erfinder: **Schlemper, Eberhard, Parkweg 3, D-7143 Vaihingen 7 (DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30 (DE)**

## Beschreibung

Die Erfindung geht aus von einer Einrichtung zur Messung der Rotationsgeschwindigkeit, bei der zwei Lichtstrahlen einen geschlossenen Lichtweg in entgegengesetzten Richtungen durchlaufen und aus der Phasendifferenz, die zwischen den beiden Lichtstrahlen nach dem Durchlaufen des geschlossenen Lichtwegs aufgrund des Sagnac-Effekts vorhanden ist, die Rotationsgeschwindigkeit ermittelt wird. Zur Erzeugung der beiden Lichtstrahlen ist ein Strahlteiler vorgesehen, der aus einem ersten Lichtstrahl die beiden weiteren Lichtstrahlen erzeugt. Die beiden weiteren Lichtstrahlen sind also ein Paar von Teilstrahlen des ersten Lichtstrahls. Die beiden Teilstrahlen werden nach dem Durchlaufen des geschlossenen Lichtwegs einander überlagert und danach einem optisch/elektrischen Wandler zugeführt. Die Auswertung der Phasendifferenz erfolgt in einer Auswerteeinrichtung, die dem optisch/elektrischen Wandler nachgeschaltet ist. Eine solche Einrichtung ist aus der DE-A-2 941 618 bekannt.

Bei der dort beschriebenen Einrichtung wird jedoch nicht nur die Rotationsgeschwindigkeit um eine, sondern um mehrere Drehachsen gemessen. Deshalb sind dort mehrere geschlossene. Lichtwege vorgesehen. Der Strahlteiler erzeugt deshalb nicht nur ein Paar von Teilstrahlen, sondern mehrere Paare von Teilstrahlen aus dem Lichtstrahl, der dem Strahlteiler zugeführt wird. Jeder der Lichtwege wird jeweils von den Teilstrahlen eines Paares in entgegengesetzten Richtungen durchlaufen. Bei dieser Einrichtung ist nur eine Auswerteeinrichtung vorhanden. Deshalb erfolgen die Messungen der Drehgeschwindigkeiten um die verschiedenen Drehachsen im Zeitmultiplex.

Messungen haben ergeben, dass auch dann, wenn die Messeinrichtung vom Aufbau her im Prinzip vollkommen reziprok ist, Störungen vorhanden sind, die durch nichtreziproke Phasendifferenzen zwischen den Teilstrahlen, die zusätzlich zu der nichtreziproken Sagnac-Phasendifferenz, aus der die Rotationsgeschwindigkeit ermittelt wird, verursacht werden. Die Ursachen hierfür sind vielfältiger Natur.

Ist beispielsweise, was bei vielen derartigen Einrichtungen der Fall ist, zwischen dem Strahlteiler, der den von der Lichtquelle abgegebenen Lichtstrahl in zwei Teilstrahlen aufteilt, und den Enden des Lichtwellenleiters jeweils ein Modulator vorgesehen, dann wird bereits dadurch, dass die beiden Modulatoren vom Strahlteiler nicht denselben Abstand haben, eine zusätzliche nichtreziproke Phasendifferenz erzeugt.

Aus der DE-A-3 100 898 ist eine Lösung bekannt, bei der zwischen zwei spulenförmig angeordneten Lichtwellenleitern umgeschaltet wird. Die Teilstrahlen durchlaufen die beiden Lichtwellenleiter so, dass Sagnac-Phasendifferenzen mit unterschiedlichen Vorzeichen, d.h. $+\emptyset_s$ bzw. $-\emptyset_s$, entstehen. Bezeichnet man die nichtreziproke «Störphase» mit $\emptyset_{NR}$, dann sind die resultierenden nichtreziproken Phasendifferenzen für die beiden Lichtwellenleiter $\emptyset_{NR}+\emptyset_s$ und $\emptyset_{NR}-\emptyset_s$. Daraus lässt sich im Prinzip die Störphase ermitteln. Diese Anordnung erfordert jedoch einen optischen Schalter, mit dem zwischen den beiden Lichtwellenleitern umgeschaltet wird. Durch das Umschalten selbst entsteht eine zusätzliche Phasendifferenz, so dass $\emptyset_{NR}$ für die Messungen mit den beiden Lichtwellenleitern nicht mehr gleich ist, sondern zwei unterschiedliche Störphasen $\emptyset_{NR1}$ und $\emptyset_{NR2}$ erhalten werden.

Aus der EP-A-0 063 977 ist eine Einrichtung zur Messung der Rotationsgeschwindigkeit bekannt, bei der nichtreziproke Störungen bei der Lichtausbreitung kompensiert werden. Bei der dort beschriebenen Lösung teilt ein Strahlteiler einen Lichtstrahl in zwei Teilstrahlen auf, die jeweils einen anderen Lichtweg durchlaufen. Jeder dieser Lichtwege ist mit einem Spiegel abgeschlossen, der den betroffenen Teilstrahl zu dem Strahlteiler zurückreflektiert.

Aufgabe der Erfindung ist es, eine Einrichtung zur Messung der Rotationsgeschwindigkeit anzugeben, bei der auf andere Weise die zusätzliche nichtreziproke Störphase ermittelt und bei der Auswertung berücksichtigt werden kann.

Die Lösung dieser Aufgabe erfolgt mit den im Anspruch 1 angegebenen Mitteln. Vorteilhafte Weiterbildungen sind den abhängigen Ansprüchen zu entnehmen.

Bei der neuen Einrichtung zur Messung der Rotationsgeschwindigkeit wird die Messgenauigkeit vergrössert. Ausserdem wird es auf besonders einfache Weise möglich, die Rotationsrichtung zu ermitteln.

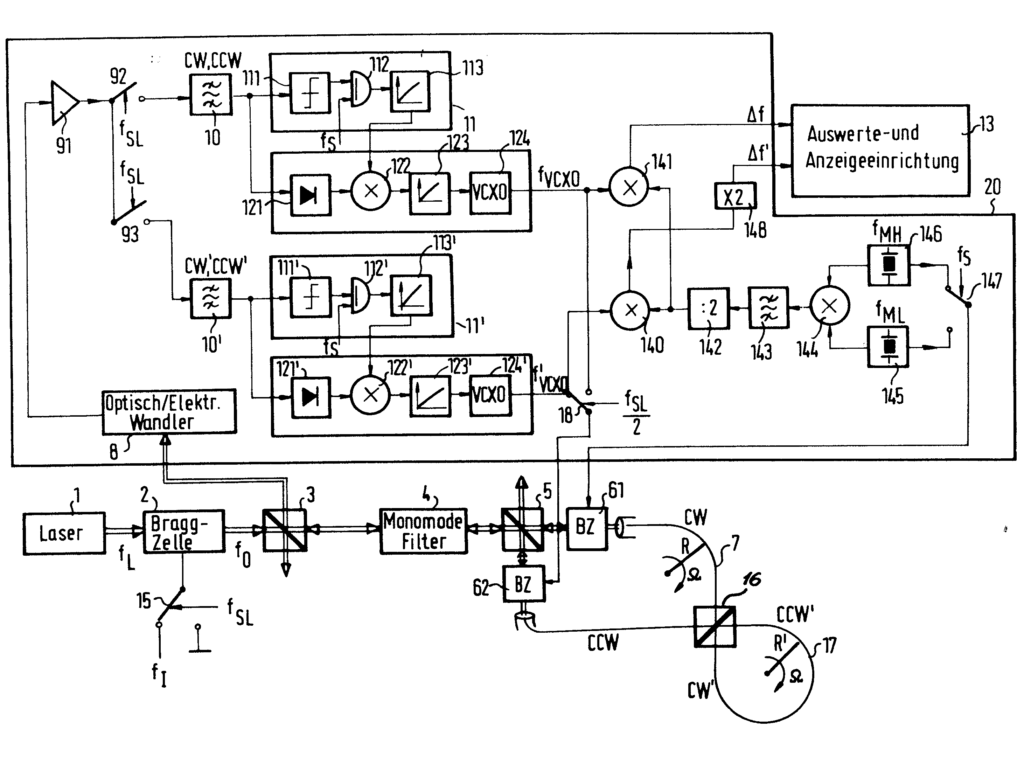

Die Erfindung wird anhand der einzigen Zeichnung, die ein Blockschaltbild der Einrichtung zur Messung der Rotationsgeschwindigkeit ist, beispielsweise näher erläutert.

Es wird zunächst der Teil der Einrichtung erläutert, der ähnlich bereits in der EP-A-0 074 609 veröffentlicht am 23.03.83 beschrieben ist.

Ein Laser 1 erzeugt einen kohärenten Lichtstrahl mit der Frequenz $f_L$, der einer Bragg-Zelle 2 zugeführt wird. Der Bragg-Zelle wird über einen bistabilen Schalter 15 ein Signal mit der Frequenz $f_I$ zugeführt. In einer seiner beiden Schalterstellungen erhält die Bragg-Zelle kein Signal. Die Strahlengänge und die optischen Bauelemente sind so justiert, dass das Ausgangssignal der Bragg-Zelle 2 nur dann auf einen Strahlteiler 3 trifft, wenn die Bragg-Zelle mit einem Signal mit der Frequenz $f_I$ angesteuert wird. Das Umschalten des Schalters 15 erfolgt mit der Frequenz $f_{SL}$. Dadurch wird der Laser für den weiteren Strahlengang mit der Frequenz $f_{SL}$ wirksam bzw. nicht wirksam geschaltet.

Durch die Ansteuerung der Bragg-Zelle mit einem Signal der Frequenz $f_I$ wird die Frequenz $f_L$ des vom Laser abgegebenen Lichtstrahls zur Frequenz $f_0 = f_L + f_I$ verschoben. Eventuell zum Laser zurückreflektiertes Licht hat somit eine andere Frequenz als das vom Laser abgegebene Licht, wodurch eine Störung des Lasers vermieden wird.

Nach dem Durchgang durch die Bragg-Zelle 2 gelangt der Lichtstrahl über einen ersten Strahlteiler 3 und ein Monomode-Filter 4 zu einem zweiten Strahlteiler 5. Im zweiten Strahlteiler 5 wird der Lichtstrahl in zwei Teilstrahlen CW und CCW aufgeteilt, die jeweils in einen geschlossenen Lichtweg 7 eingekoppelt werden und diesen im Uhrzeigersinn CW bzw. entgegen dem Uhrzeigersinn CCW durchlaufen.

Beide Teilstrahlen werden vor dem Eintritt in den geschlossenen Lichtweg 7 in zwei weiteren Bragg-Zellen 61 und 62 frequenzverschoben; der CW-Teilstrahl in der Bragg-Zelle 61, der CCW-Teilstrahl in der Bragg-Zelle 62.

Die Bragg-Zelle 61 wird abwechselnd mit den Frequenzen $f_{MH}$ und $f_{ML}$, die Bragg-Zelle 62 mit der Frequenz $f_{VCXO}$ angesteuert; sie verschieben somit die Frequenzen ihrer Eingangssignale um die entsprechenden Beträge. Der CW-Teilstrahl weist nach Durchgang durch Bragg-Zelle 61 die Frequenz $f_O + f_{MH}$ bzw $f_O + f_{ML}$, der CCW-Teilstrahl nach Durchgang durch die Bragg-Zelle 62 die Frequenz $f_O + f_{VCXO}$ auf.

Nach dem Durchlaufen des Lichtwellenleiters 7 gelangt der CW-Teilstrahl über die Bragg-Zelle 62, der CCW-Teilstrahl über die Bragg-Zelle 61 zu dem Strahlleiter 5, der jetzt die beiden Teilstrahlen wieder zu einem gemeinsamen Strahl vereinigt. Beide Teilstrahlen erfahren dabei in den Bragg-Zellen eine nochmalige Frequenzverschiebung, und weisen somit die Frequenzen

$$f_{CW} = f_O + f_{MH} \text{ (oder } f_{ML}) + f_{VCXO}$$
$$f_{CCW} = f_O + f_{VCXO} + f_{MH} \text{ (oder } f_{ML}) \text{ auf.}$$

Bei der Überlagerung im Strahlteiler weisen beide Teilstrahlen also die gleiche Frequenz $f_O + f_{VCXO} + f_{MH}$ (oder $f_{ML}$) auf. Das Interferenzsignal gelangt über das Monomodefilter 4 und den Strahlteiler 3 zu einem optisch/elektrischen Wandler 8.

Die Frequenzen $f_{MH}$ und $f_{ML}$ werden von Oszillatoren 146 und 145, die Signale mit konstanten Frequenzen abgeben, erzeugt.

Ein Schalter 147 schaltet jeweils eines dieser beiden Signale als Ansteuersignal zu der Bragg-Zelle 61. Die Umschaltung erfolgt periodisch mit der Frequenz $f_s$. An die Oszillatoren ist ein Mischer 144 angeschlossen, und diesem sind ein Filter 143 und ein Binärteiler 142 nachgeschaltet. Durch diese Schaltung wird aus den Signalen mit den Frequenzen $f_{MH}$ und $f_{ML}$ ein Signal mit der Frequenz

$$f_M = \frac{f_{MH} + f_{ML}}{2}$$

erzeugt.

Das Ausgangssignal des optisch/elektrischen Wandlers 8 wird in einem Verstärker 91 vorverstärkt und in einem Bandfilter 10 gefiltert. Die Mittenfrequenz des Filters 10 ist auf die Schaltfrequenz $f_s$ des Schalters 147 abgestimmt.

Das Wechselspannungssignal des Bandfilters 10 wird in einem Gleichrichter 121 gleichgerichtet, in einem Multiplizierer 122 mit einem drehrichtungsabhängigen Vorzeichen versehen (hierzu erfolgt eine Multiplikation mit einem Signal, dessen Erzeugung noch erläutert werden wird) und anschliessend in einem Integrator 123 integriert. Das Ausgangssignal des Integrators 123 steuert die Ausgangsfrequenz $f_{VCXO}$ eines spannungsgesteuerten Oszillators 124.

Das dem Multiplizierer zugeführte Signal wird in einem Vorzeichendetektor 11 erzeugt. Dieser enthält einen Begrenzer 111, eine Exklusiv-Oder-Schaltung 112 und einen Integrator 113. Die Exklusiv-Oder-Schaltung erhält als Eingangssignale das Ausgangssignal des Begrenzers 111 und das Signal, mit dem der Schalter 147 umgeschaltet wird.

Die Arbeitsweise der Einrichtung zur Messung der Rotationsgeschwindigkeit wird nun unter der Annahme beschrieben, dass die Bragg-Zelle 2 ständig mit dem Signal mit der Frequenz $f_i$ angesteuert wird, d.h. dass der Laser wirksam geschaltet ist.

Das Ausgangssignal des VCXO 124 wird einem Multiplizierer 141 zugeführt, der als weiteres Eingangssignal das Ausgangssignal des Teilers 142, das die Frequenz $f_M$ hat, erhält. Das Ausgangssignal dieses Multiplizierers 141 wiederum wird einer Anzeigeeinrichtung 13 zugeführt.

Dadurch, dass die Bragg-Zelle mit unterschiedlichen Frequenzen angesteuert wird, ist der Lichtstrahl, der nach der Überlagerung im Strahlteiler 5 vorhanden ist (drehrichtungsunabhängig) phasenmoduliert.

Die Frequenzdifferenz $\Delta f$ zwischen dem CW-Teilstrahl und dem CCW-Teilstrahl im geschlossenen Lichtweg 7 beträgt $\Delta f = f_{VCXO} - f_{MH}$ beziehungsweise $\Delta f = f_{VCXO} - f_{ML}$, abhängig von der Stellung des Schalters 147. Durch die Frequenzdifferenz $\Delta f$ zwischen den Teilstrahlen im geschlossenen Lichtweg 7 baut sich eine Phasendifferenz $\emptyset_B$ zwischen dem CW- und dem CCW-Teilstrahl auf, die proportional zur Laufzeit der Teilstrahlen im geschlossenen Lichtweg 7 und proportional zur Frequenzdifferenz ist. Es ist

$$\emptyset_B = 2\pi \cdot \frac{n \cdot L}{c} \cdot (f_{VCXO} - f_{MH}) \text{ bzw.}$$
$$\emptyset_B = 2\pi \cdot \frac{n \cdot L}{c} \cdot (f_{VCXO} - f_{ML}) \tag{1}$$

n = Brechungsindex, L = Länge des geschlossenen Lichtweges, c = Lichtgeschwindigkeit. Die Abkürzung B soll auf Bragg-Zelle hinweisen und daran erinnern, dass die Phasendifferenz $\emptyset_B$ mittels der Bragg-Zellen 61 und 62 beliebig gesteuert werden kann.

Zum Verständnis des Modulationsverfahrens sei zunächst angenommen, dass sich die Einrichtung zur Messung der Rotationsgeschwindigkeit in Ruhe befindet durch den Sagnac-Effekt bedingte Phasendifferenz $\emptyset_s = O$ und dass $f_{VCXO} = f_M =$ Mittenfrequenz von $f_{MH}$ und $f_{ML}$ ist. Die Schaltfrequenz $f_s$, mit der die beiden Frequenzen $f_{MH}$ und $f_{ML}$ alternierend an die Bragg-Zelle 61 angelegt wird, betrage 1 kHz. Die Frequenzdifferenz zwischen $f_{MH}$ und $f_{ML}$ sei so gewählt, dass sich bei Umschalten zwischen diesen beiden Festfrequenzen nach Gleichung (1) gerade ein Phasensprung

von $\pi$ ergibt. Da nach Voraussetzung $f_{VCXO} = f_M$ ist, bedeutet die Umschaltung zwischen $f_{MH}$ und $f_{ML}$, dass auf der Kennlinie des Ausgangssignals des optisch/elektrischen Wandlers (Intensität als Funktion des Phasenwinkels zwischen den beiden Teilstrahlen) zwischen den Punkten $\emptyset = +\frac{\pi}{2}$ und $\emptyset = -\frac{\pi}{2}$ mit $f_s$ hin- und hergeschaltet wird.

Wenn die Intensität des Ausgangssignals des optisch/elektrischen Wandlers 8 für $\emptyset = O$ gerade $I_1$ beträgt, dann ergibt die periodische Umschaltung zwischen $f_{MH}$ und $f_{ML}$ am Wandler 8 ein Gleichspannungssignal mit der Intensität $I_1/2$.

Tritt nun eine Drehbewegung mit der Rotationsgeschwindigkeit $\Omega$ auf, dann wird der Phasenwinkel $\emptyset = \emptyset_{B1} + \emptyset_S$ bzw. $\emptyset = \emptyset_{B2} + \emptyset_S$. Das Umschalten mit $f_s$ ergibt deshalb ein rechteckförmiges Signal mit der Frequenz $f_s$, dessen Phasenlage bezüglich des Schaltsignals von der Drehrichtung abhängt.

Der Phasenregelkreis, bestehend aus Vorverstärker 91, Bandfilter 10 mit Mittenfrequenz $f_s$, Vorzeichendetektor 11, sowie Gleichrichter 121, Integrator 123 und VCXO 124 ist so ausgelegt, dass der VCXO 124 solange verstimmt wird, bis das Wechselspannungssignal am Ausgang des Bandfilters 10 verschwindet. Wenn dieser Zustand eingetreten ist, dann kompensiert die mittels der Bragg-Zelle 61 erzeugte reziproke Phasendifferenz

$$\emptyset_B = 2\pi \cdot \frac{n \cdot L}{c} \cdot (f_{VCXO} - f_M)$$

die durch die Rotation erzeugte Sagnac-Phasendifferenz

$$\emptyset_S = \frac{4\pi \cdot L \cdot R}{\lambda_0 \cdot c} \cdot \Omega$$

Daraus ergibt sich:

$$\Omega = \frac{n \cdot \lambda_0 (f_{VCXO} - f_M)}{2_R}$$

($R$ ist der Radius einer Windung des spulenförmig angeordneten Lichtwellenleiters). Das heisst: Die Frequenzdifferenz $f_{VCXO} - f_M$ ist direkt proportional zur Drehrate $\Omega$. Ein Signal mit dieser Frequenz ist am Ausgang des Mischers 141 vorhanden. Dieses Signal wird der Anzeigeeinrichtung 13 zugeführt.

Messungen mit einer Einrichtung wie bislang beschrieben, zeigen, dass bei $\Omega = O$ und somit $\emptyset_S = O$ bereits eine Frequenzdifferenz ($f_{VCXO} - f_M$) zu beobachten ist, die mit der Temperatur driftet. Dies lässt auf eine nichtreziproke «Störphase» $\emptyset_{NR}$ schliessen, die sich der nichtreziproken «Messphase» $\emptyset_S$ überlagert. Der Phasenregelkreis kompensiert mit $\emptyset_B$ also nicht allein $\emptyset_S$, sondern $\emptyset + \emptyset_{NR}$.

Die Störphase wird unter anderem dadurch verursacht, dass bei der Realisierung nicht gewährleistet werden kann, dass die optischen Längen zwischen den beiden Bragg-Zellen 61, 62 und dem Strahlteiler 5 stets genau den gleichen Wert haben. Dadurch wird der in Bezug auf die Wege für die beiden Teilstrahlen an sich reziproke Aufbau zu einem «geringfügig» nichtreziproken Aufbau. Ausser dieser Störung gibt es noch weitere Einflüsse, die den Aufbau nichtreziprok werden lassen.

Nachfolgend wird, ebenfalls anhand der Zeichnung, erläutert, welche Massnahmen bei der neuen Einrichtung getroffen sind, damit die nichtreziproke Störphase $\emptyset_{NR}$ erkennbar ist und somit bei der Auswertung berücksichtigt werden kann.

Über einen weiteren passiven Strahlteiler 16 ist mit dem spulenförmig angeordneten Lichtwellenleiter 7 ein weiterer spulenförmig angeordneter Lichtwellenleiter 17 verbunden. Der weitere Strahlteiler 16 teilt jeden Teilstrahl in zwei weitere Teilstrahlen auf, wobei die eine Hälfte im Lichtwellenleiter 7 verbleibt und die andere Hälfte in den weiteren Lichtwellenleiter 17 eingekoppelt wird. Hierbei ist zu bemerken, dass die Einkopplung so erfolgt, dass sich die Teilstrahlen, die durch den weiteren Strahlteiler erzeugt werden, in den beiden Lichtwellenleitern in entgegengesetzten Rotationsrichtungen ausbreiten. So breitet sich beispielsweise die eine Hälfte eines Teilstrahls im ersten Lichtwellenleiter 7 im Uhrzeigersinn und die andere Hälfte im weiteren Lichtwellenleiter entgegen dem Uhrzeigersinn aus. Entsteht also nach dem Durchlaufen des ursprünglichen Lichtwellenleiters 7 bei einer Rotation eine Sagnac-Phasendifferenz von $+\emptyset_S$, dann ist die entsprechende Sagnac-Phasendifferenz für den weiteren Lichtwellenleiter $-\emptyset_S$.

Durch den weiteren passiven Strahlteiler 16 wird keine zusätzliche nichtreziproke Phasendifferenz erzeugt.

Ein nicht dargestellter Taktgenerator erzeugt ein rechteckförmiges Taktsignal mit der Frequenz $f_{SL}$. Dieses Taktsignal steuert den Schalter 15, wodurch der vom Laser 1 erzeugte Lichtstrahl wirksam bzw. nicht wirksam geschaltet wird. Die Zeit $\tau_{EIN}$, während der Laser wirksam geschaltet ist, ist auf die Laufzeit der Teilstrahlen im geschlossenen Lichtweg, realisiert durch den Lichtwellenleiter 7, abgestimmt. Es ist jeweils

$$\tau_{EIN} = \frac{n \cdot L}{c}.$$

Die Zeiten, während der der Laser jeweils nicht wirksam geschaltet ist, sind

$$\tau_{AUS} = 2\tau_{EIN}.$$

Die Überlagerung der CW- und CCW-Teilstrahlen, die den ursprünglichen Lichtwellenleiter 7 durchlaufen, erfolgt während der ersten Hälfte von $\tau_{AUS}$. Zwischen den Teilstrahlen ist eine Phasendifferenz von

$$\emptyset = \emptyset_{NR} + \emptyset_S$$

vorhanden.

Die Überlagerung der CW'- und CCW'-Teilstrahlen, die den weiteren Lichtwellenleiter 17 durchlaufen, erfolgt während der zweiten Hälfte von $\tau_{AUS}$. Zwischen diesen beiden Teilstrahlen ist eine Phasendifferenz von

$$\emptyset' = \emptyset_{NR} + \emptyset_S - \emptyset'_S$$

vorhanden.

$$\left(\emptyset_S = \frac{4\pi\, L \cdot R}{\lambda_0 \cdot c}\, \Omega\,;\; \emptyset'_S = \frac{4\pi\, L' \cdot R'}{\lambda_0 \cdot c}\, \Omega\right).$$

Bei dem in der Zeichnung dargestellten Ausführungsbeispiel ist der Verstärker 91 über einen Schalter 92 mit dem Bandfilter 10 verbunden. Es ist ausserdem ein weiteres Bandfilter 10' vorhanden, dem, entsprechend dem Bandfilter 10, ein Vorzeichendetektor 11' sowie ein Gleichrichter 121', ein Multiplizierer 122', ein Integrator 123' sowie ein VCXO 124' nachgeschaltet sind. Mit dem Bandfilter 10' ist der Verstärker 91 über einen Schalter 93 verbunden. Beide Schalter 92, 93 werden von dem Taktsignal, das die Frequenz $f_{SL}$ hat, gesteuert. Die beiden Schalter 92 und 93, von denen jeweils nur einer geschlossen ist, wirken als Abtast/Halteglieder. Die Steuersignale mit der Frequenz $f_{SL}$ für die beiden Schalter sind zeitlich um $\frac{\tau_{AUS}}{2}$ gegeneinander verschoben. Durch diese Steuerung werden die Signale mit den Phasendifferenzen $\emptyset$ und $\emptyset'$ zeitlich voneinander getrennt.

Zur Ansteuerung der Bragg-Zelle 62 wird jetzt ausser dem Ausgangssignal des VCXO 124 mit der Frequenz $f_{VCXO}$ auch das Ausgangssignal des VCXO 124' mit der Frequenz $f'_{VCXO}$ verwendet. Ein Schalter 18 wird von einem Signal der Frequenz $\frac{f_{SL}}{2}$, das aus dem Signal mit der Frequenz $f_{SL}$ abgeleitet wird, gesteuert.

Für die Nachregelung des VCXO 124' gilt das für die Nachregelung des VCXO 124 Gesagte entsprechend. Durch ihn wird also $\emptyset' = \emptyset_{NR} + \emptyset_S - \emptyset'_S$ kompensiert. Im eingeschwungenen Zustand erhält man also:

$$\emptyset = \emptyset_{NR} + \frac{4\pi\, R \cdot L}{\lambda_0 \cdot c} \cdot \Omega + \frac{2\pi\, n \cdot L}{c}\, (f_{VCXO} - f_M) = 0 \quad (2)$$

und $\emptyset' = \emptyset_{NR} + \dfrac{4\pi\, R \cdot L}{\lambda_0 \cdot c}\, \Omega - \dfrac{4\pi\, R' \cdot L'}{\lambda_0 \cdot c}\, \Omega +$

$$+ \frac{2\pi\, n(L+L')}{c}\, (f'_{VCXO} - f_M) = 0 \quad (3)$$

Dabei bezieht sich die erste Gleichung (2) auf die Auswertung der Signale des ersten Zeitintervalls von $\tau_{AUS}$ und Gleichung (3) entsprechend auf die Auswertung des zweiten Intervalls von $\tau_{AUS}$.

Das Ausgangssignal des VCXO 124' wird ausserdem einem weiteren Mischer 140, der als weiteres Eingangssignal das Ausgangssignal des Binärteilers 142 erhält, zugeführt. Das Ausgangssignal des Mischers 140 wiederum wird über einen Multiplizierer (Multiplikation mit dem Faktor 2) der Auswerteeinrichtung 13 zugeführt.

Die Mischer 140 und 141 bilden Signale mit den beiden Frequenzdifferenzten $f_{VCXO} - f_M = \Delta f$ und $f'_{VCXO} - f_M = \Delta f'$.

Aus der Frequenzdifferenz $\Delta f'$ der zweiten Messung kann in der Auswerteeinrichtung unter gewissen Voraussetzungen auf die von $\emptyset_{NR}$ bei der ersten Messung herrührende zusätzliche Phasendifferenz zurückgerechnet werden. Dies wird im folgenden näher erläutert.

Zunächst wird angenommen, dass $\emptyset_{NR}$ für die beiden Lichtwege L und L+L' gleich gross sei. Dies ist für den oben geschilderten Fall erfüllt. Ausserdem muss gefordert werden, dass bei der zweiten Messung $\emptyset_S = \emptyset'_S$ ist. Nur dann kann eine drehratenunabhängige Messung von $\emptyset_{NR}$ überhaupt durchgeführt werden. Die Genauigkeit, mit der die Störphase $\emptyset_{NR}$ ermittelt werden kann, ist abhängig von der Übereinstimmung der Produkte $L \cdot R$ und $L' \cdot R'$. Allerdings ist ein Fehler in der Bestimmung von $\emptyset_{NR}$ wegen $\emptyset_S - \emptyset'_S \sim \Omega$ auch von der momentan vorliegenden Drehrate $\Omega$ abhängig.

Bei einer bifilar gewickelten Lichtwellenleiterspule kann eine Übereinstimmung von $L \cdot R$ mit $L' \cdot R'$ auf eine Genauigkeit von $10^{-4}$ erzielt werden. Eine Logikschaltung in der Auswerteeinrichtung trägt der endlichen Übereinstimmung zwischen $\emptyset_S$ und $\emptyset'_S$ dadurch Rechnung, dass eine Messung von $\emptyset_{NR}$ nur dann durchgeführt wird, wenn der Messwert für $\Omega$ aus $\emptyset_{NR} + \emptyset_S$ einen vorgegebenen Schwellwert nicht überschreitet. Bei überschreiten der Schwelle wird mit dem vorhergehenden Messwert $\emptyset_{NR}$ weitergerechnet.

Beispiel:
Schwelle $\emptyset_{NR} + \emptyset_S$ liege bei $10^{-1}$ Grad; dies entspricht $= 100$ Grad/h.

Dann kann mit $\emptyset_S - \emptyset'_S \leq 10^{-4}\, \emptyset_S$ die nichtreziproke Störphase auf $10^{-4}$ Grad bestimmt werden; dies entspricht einem Fehler von 0,01 Grad/h.

Um zu zeigen, wie aus $\Delta f'$ auf den Anteil, der von $\emptyset_{NR}$ in $\Delta f$ herrührt, zurückgerechnet werden kann, soll zur Vereinfachung angenommen werden, dass $\Omega = 0$ sei. Der Fall $\Omega \neq 0$ wird anschliessend beschrieben.

Aus den Gleichungen (2) und (3) folgt für $\Omega = 0$:

$$\emptyset_{NR} + \frac{2\pi\, n \cdot L}{c} \cdot \Delta f = 0$$

und $\emptyset_{NR} + \dfrac{2\pi\, n\, (L+L')}{c} \cdot \Delta f' = 0.$

Bei konstantem $\emptyset_{NR}$, gemessenem $\Delta f'$ (bei bekannten L und L') kann $\Delta f$ berechnet werden. Es ist

$$\Delta f = \frac{L+L'}{L} \cdot \Delta f'.$$

Besonders einfach ist der Fall mit $L = L'$; dann gilt

$$\Delta f = 2\Delta f'.$$

Falls $\Omega \neq 0$ gilt, kann die Messgrösse $\Delta f$ in zwei Anteile zerlegt werden, nämlich in ein $\Delta f\,(\Omega)$ und

ein $\Delta f$ ($\emptyset_{NR}$). Da $\emptyset_{NR}$ unabhängig von $\Omega$ ist, ist der Anteil $\Delta f$ ($\emptyset_{NR}$) derselbe wie für den Fall $\Omega = 0$ und kann aus der zweiten Messung entnommen werden (wie vorher), da die zweite Messung bis auf den vernachlässigbaren Fehler $\emptyset_S-\emptyset'_S$ von $\Omega$ unabhängig erfolgt.

Der Fall $L = L'$ kann besonders leicht in der Praxis realisiert werden. Beide Spulen werden gleichzeitig gewickelt und die Bedingungen $\Delta f$ ($\emptyset_{NR}$) = $2 \cdot \Delta f'$ für $L = L'$ wird dadurch erfüllt, dass vor der Auswerte- und Anzeigeeinrichtung die Frequenz $\Delta f' = f'_{VCO}-f_M$ im Multiplizierer 148 verdoppelt wird.

## Patentansprüche

1. Einrichtung zur Messung der Rotationsgeschwindigkeit mit einer einen Lichtstrahl erzeugenden Lichtquelle (1), bei der zur Aufteilung dieses Lichtstrahls in zwei Teilstrahlen, die einen Lichtweg in entgegengesetzten Richtungen durchlaufen, ein Strahlteiler (5) vorgesehen ist, bei der zur Überlagerung der beiden Teilstrahlen nach Durchlaufen des Lichtwegs ein Strahlteiler (5) vorgesehen ist, bei der der durch die Überlagerung der beiden Teilstrahlen erzeugte Lichtstrahl einem optisch/elektrischen Wandler (8), dem eine Signalverarbeitungsschaltung (20) sowie eine Auswerte- und Anzeigeeinrichtung (13) nachgeschaltet sind, zuführbar ist, bei der zur Ermittlung der Rotationsgeschwindigkeit die durch den Sagnac-Effekt bedingte Phasendifferenz zwischen den beiden Teilstrahlen ausgewertet wird, bei der der Lichtweg aus einem ersten (7) geschlossenen und einem weiteren geschlossenen Lichtweg (17) besteht, wobei der erste geschlossene Lichtweg (7) über einen passiven, ohne Steuerung arbeitenden Strahlteiler (16) an den weiteren geschlossenen Lichtweg (17) angekoppelt ist, bei der die Einkopplung der Teilstrahlen in den weiteren Lichtweg (17) so erfolgt, dass sich ihre Umlaufrichtung ändert, bei der die Auswertung des durch die Überlagerung der Teilstrahlen erzeugten Lichtstrahls im Zeitmultiplex erfolgt und zwar so, dass einerseits nur der Lichtstrahl, der durch Überlagerung der Teilstrahlen, die nur einen geschlossenen Lichtweg (7) durchlaufen haben, und andererseits der Lichtstrahl, der durch Überlagerung der Teilstrahlen, die beide geschlossene Lichtwege (7, 17) durchlaufen haben, auswertbar wird, und bei der durch einen Vergleich der beiden Auswerteergebnisse zusätzliche nichtreziproke Phasendifferenzen zwischen den beiden Teilstrahlen ermittelbar und bei der Messung verwertbar sind.

2. Einrichtung nach Anspruch 1, bei der der weitere geschlossene Lichtweg (17) die gleiche optische Länge wie der erste geschlossene Lichtweg (7) aufweist.

3. Einrichtung nach Anspruch 1 oder 2, bei der die geschlossenen Lichtwege (7, 17) jeweils durch einen Lichtwellenleiter realisiert sind.

4. Einrichtung nach Anspruch 3, bei der beide Lichtwellenleiter spulenförmig angeordnet sind und die Windungen der beiden Spulen gleiche Radien aufweisen.

5. Einrichtung nach Anspruch 4, bei der beide Lichtwellenleiter bifilar auf eine Spule gewickelt sind.

6. Einrichtung nach einem der Ansprüche 3 bis 5, bei der die Lichtquelle (1) durch ein Signal, das eine bestimmte Periodendauer ($\frac{1}{f_{SL}}$) aufweist, wirksam bzw. nicht wirksam schaltbar ist, bei der das Wirksamschalten während des ersten Drittels einer jeden Periode möglich ist, bei der während des zweiten Drittels einer jeden Periode das Signal, das durch Überlagerung der Teilstrahlen, die nur den ersten Lichtwellenleiter (7) durchlaufen haben, gebildet werden kann, auswertbar ist und bei der während des letzten Drittels einer jeden Periode das Signal, das durch Überlagerung der Teilstrahlen, die beide Lichtwellenleiter durchlaufen haben, gebildet werden kann, auswertbar ist.

## Claims

1. Rotation rate measuring instrument comprising a light source (1) producing a light beam, wherein a beam splitter (5) is provided for splitting the said light beam into two component beams which travel over a light path in opposite directions, wherein a beam splitter (5) is provided for combining the two component beams after they emerge from the light path, wherein the light beam generated by the combining of the two component beams can be passed to an optical-to-electrical transducer (8) which is followed by a signalprocessing circuit (20) and an evaluation and display unit (13), wherein, to determine the rotation rate, the phase difference between the two component beams due to the Sagnac effect is evaluated, wherein the light path consists of a first closed light path (7) and another closed light path (17), the first closed light path (7) being connected to the other closed light path (17) via a passive beam splitter (16) operating without control, wherein the coupling of the component beams into the other light path (17) is done in such a way that their direction of propagation changes, wherein time-division multiplexing is used to evaluate the light beam resulting from the combination of the component beams, in such a way that on the one hand only the light beam resulting from the combination of the component beams which have traversed only one closed light path (7) and on the other hand the light beam resulting from the combination of the component beams which have traversed both closed light paths (7, 17) can be evaluated, and wherein additional non-reciprocal phase differences between the two component beams can be determined by a comparison of the two evaluation results and can be used in the measuring.

2. An instrument as claimed in Claim 1, wherein the additional closed light path (17) has the same optical length as the first closed light path (7).

3. An instrument as claimed in CLaim 1 or 2, wherein each of the closed light paths (7, 17) is implemented with an optical waveguide.

4. An instrument as claimed in Claim 3, wherein both optical waveguides are coiled and the windings of the two coils have the same radius.

5. An instrument as claimed in Claim 4, wherein both optical waveguides are wound as a bifilar winding on one coil form.

6. An instrument as claimed in any one of Claims 3 to 5, wherein the light source (1) is activated and deactivated by a signal having a given period $(\frac{1}{f_{SL}})$, wherein the activation can take place during the first third of each period, wherein, during the second third of each period, the signal which can be formed by combining of the component beams which have travelled only around the first optical waveguide (7) can be evaluated, and wherein, during the last third of each period, the signal which can be formed by combining the component beams which have travelled around both optical waveguides can be evaluated.

## Revendications

1. Appareil de mesure de vitesse de rotation comprenant une source de lumière (1) produisant un faisceau lumineux, dans lequel un séparateur (5) est prévu pour diviser ce faisceau lumineux en deux faisceaux partiels parcourant, dans des directions opposées, un trajet lumineux fermé, dans lequel un séparateur (5) est prévu pour combiner les deux faisceaux partiels ayant parcouru le trajet lumineux, dans lequel le faisceau produit par la combinaison des faisceaux partiels est appliqué à un transducteur optique-électrique (8), lequel est suivi d'un circuit de traitement de signal (20) et d'un dispositif d'évaluation et d'affichage (13) dans lequel la différence de phase entre faisceaux partiels causée par l'effet Sagnac est évaluée pour déterminer la vitesse de rotation, dans lequel le trajet lumineux est composé d'un premier trajet lumineux fermé (7) et d'un trajet lumineux fermé additionnel (17), le premier trajet lumineux fermé (7) étant couplé au trajet lumineux fermé additionnel (17), par un séparateur passif, fonctionnant sans signal de commande, dans lequel le couplage des faisceaux partiels au trajet lumineux fermé additionnel (17) est tel que leur direction de propagation change, dans lequel un multiplexage temporel est utilisé pour l'évaluation du faisceau lumineux résultant de la combinaison des faisceaux partiels, de manière que soit évalués, soit le faisceau résultant de la combinaison des faisceaux partiels ayant parcouru un trajet lumineux fermé (7) seulement, soit le faisceau résultant de la combinaison des faisceaux partiels ayant parcouru les deux trajets lumineux fermés (7, 17) et dans lequel des différences de phase non réciproques entre les deux faisceaux partiels sont déterminées par comparaison des deux résultats d'évaluation et sont prises en compte dans la mesure.

2. Appareil conforme à la revendication 1, dans lequel le trajet lumineux fermé additionnel (17) a la même longueur optique que le premier trajet lumineux fermé (7).

3. Appareil conforme à la revendication 1 ou deux, dans lequel les trajets lumineux (7, 17) sont réalisés chacun sous la forme d'un guide d'onde optique.

4. Appareil conforme à la revendication 3, dans lequel les deux guides d'onde optique sont en forme de bobine et les enroulements des deux bobines ont des rayons égaux.

5. Appareil conforme à la revendication 4, dans lequel les deux guides d'onde optique sont enroulés sous forme bifilaire sur une bobine.

6. Appareil de mesure de vitesse de rotation conforme à l'une quelconque des revendications 3 à 5, dans lequel la source de lumière (1) est activée et désactivée par un signal ayant une période déterminée $(1/f_{SL})$, l'activation ayant lieu au cours du premier tiers d'une période, l'évaluation du signal résultat de la combinaison des faisceaux partiels ayant parcouru le premier guide d'onde optique (7) seulement au lieu durant le deuxième tiers de la période, tandis que l'évaluation du signal résultant de la combinaison des faisceaux partiels ayant parcouru les deux guides d'onde optique a lieu durant le troisième tiers de la période.

CW,CCW

Auswerte- und
Anzeigeeinrichtung

$f_S'$

$f_{VCXO}$

CW,CCW'

$f_S'$

$f'_{VCXO}$

$\frac{f_{SL}}{2}$

$f_{MH}$

$f_{ML}$

$f_S$

Optisch/Elektr.
Wandler

Laser

Bragg-
Zelle

Monomode
Filter

BZ

BZ

BZ

CW

CCW

CCW'

CW'

$f_L$

$f_0$

$f_{SL}$

$f_I$

$f_{SL}$

$f_{SL}$

$\Omega$

$R$

$\Omega$

$R'$

0 113 890